(19) Europäisches Patentamt
European Patent Office
Office européen des brevets

(11) Publication number: 0 259 274 A1

(12) # EUROPEAN PATENT APPLICATION

(21) Application number: 87830224.9

(22) Date of filing: 16.06.87

(51) Int.Cl.[3]: A 23 L 1/221

(30) Priority: 08.07.86 IT 2106086

(43) Date of publication of application: 09.03.88 Bulletin 88/10

(84) Designated Contracting States: AT BE CH DE ES FR GB GR IT LI LU NL SE

(71) Applicant: Antonucci Tarolla, Maria Serena
Via Albinoni, 3
I-20052 Monza Milano(IT)

(72) Inventor: Antonucci Tarolla, Maria Serena
Via Albinoni, 3
I-20052 Monza Milano(IT)

(54) **System for aromatizing foods.**

(57) This invention is designed to prepare flavourings, seasonings or aromatic substances from natural vegetable products such as onion, garlic, carrots, basil, parsley, celery, pepper, fruits (and otherwise) and any other edible product in common use around the world. These foods will be ground or crushed and then submitted to centrifugal force or pressure in order to extract the essential containing all the basic natural properties, while discarding the inessential parts. This juice will then be immediately placed in appropriate containers and can this be used as a "Spray".

EP 0 259 274 A1

Croydon Printing Company Ltd

DESCRIPTION

Currently the flavouring, seasoning, or giving aroma to foods with natural ingredients (onion, garlic, carrot, basil, parsley, celery and so on) is carried out by using these ingredients either in their natural state (whole or ground) or drying them, in which case they may be reconstituted by the addition of water. Foods are flavoured either before or after cooking or when they have already been served, according to taste. These flavourings or ingredients (generally of vegetable origin) have either to be prepared for use on the spot, or else they can be obtained in commercially prepared tubes, bottles, mills and so on. In the latter case, the product is always fresh, dried, frozen, in powdered form or in sauces which generally have other ingredients and are semi-liquid or creamy.

It is important to note that the dried seasonings described above, lose much of their organic properties when stored for any lenght of time. They spoil, may go mouldy, and lose some of their active alimentary properties.

It is well knoun that all vegetable products have a high liquid content, which shares the same characteristics of the plant of which it forms an integral part, with regard to flavour, aroma, and also its physical-chemical properties.

By extracting all the juice from the plant (not dry) from the bulb, tuber, trunk, leaves or flowers, we can obtain the lymph of the plant itself. This juice consists of both the raw, rising lymph and the refined or descending lymph; together they contain all the organic substances of the plant, and to consume this juice is equivalent to consuming the entire plant or parts of it (leaves, flowers, fruit etc.).

This system, however, has the advantage of removing the dross of the plant, the woody substances which have no nutritional value and are often indigestible. Thus we can greatly reduce the volume of the entire plant (or of the parts used), and can conserve the essence with greater ease and in less space; above all, we can have the essential content of the plant at hand in a simple and practical form for use both in the kitchen and at the table.

The fresh juice obtained from centrifugal operation is immediately placed in containers of glass or other suitable material approved for alimentary purposes (small bottles or jabs, for example), of a size and shape suitable both for the table and for small family kitchens as well industrial kitchens or hotels.

When these containers have been filled with the vegetable essence, they can then be permanently pressurized or compressed using forced air, neutral or alimentary gases; to use the juice it is then sufficient to press the knob or key on the container to obtain what is now commonly called a "Spray" or an atomizer in italian.

Foods can thus be flavoured or seasoned as desired by the cook or the consumer. The same result can be obtained by fitting the containers with a small pressure pump which is activated by hand at the moment of use. If it is considered necessary, stabilizers and/or legally permitted natural or chemical preservatives can be added. These should be odourless and tasteless. This system can be produced using any technical application, any system of extracting liquid essences and with containers and parts of any size or shape, made of any suitable material, to gain optimum results.

The inventor does not consider it necessary to present graphs, but does wish to obtain the patent for the general idea and all its inherent connections and implications, in order to achieve the aim of improving and modernising the current systems of administering, conserving and distributing flavourings and/or seasonings and/or aromas of natural vegetable products.

CLAIMS

(1) System for flavouring, seasoning or giving aroma to foods, characterised by the integral extraction of the natural and essential juice from vegetable products.

(2) System, as in the previous point, characterised by the immediate induction of the juice of the vegetable products into containers so that the juice will not lose its organic characteristics by effluvium or evaporation.

(3) System, as in previous points, characterised by the fact that the containers are pressurised, immediately after the introduction of the juice, using air or suitable (alimentary) gases.

(4) System, as in previous points, characterised by the fact that, as an alternative its point number 3, the containers are fitted with a hand-activated pressure pump.

(5) System, as in previous points, characterised by the fact that the containers adopted in accordance with points 3 or 4 can emit the natural juice with the system commonly knoun as a "Spray", in other words by atomizing the juice itself. The juice is then directed by the person using it onto the food itself.

(6) System, as in previous points, characterised by the fact that the containers can be of any shape or size convenient for their purpose, and of any suitable material approved by law for alimentary purposes.

(7) System, as in previous points, characterised by the fact that the juice is to be used for flavouring, seasoning or giving aroma to raw or pre-cooked foods, either as they are being prepared or when they have already been served at the table.

(8) System, as in previous points, characterised by the fact that the manufacturer can, if necessary, add stabilizers or preservatives to the juice or the pressurizer; these can be natural or chemical, legally permitted, alimentary and non-toxic.

The projected system is as described and explained above, and for the above specified purposes.

0259274

European Patent Office

# EUROPEAN SEARCH REPORT

Application number

EP 87 83 0224

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | DE-A-2 516 212 (WELSFORD et al.) * Claims 1-9; page 3, lines 28-32, page 4, lines 1-8; figure 1 * | 1-8 | A 23 L 1/221 |
| X | FR-A-2 142 765 (LIEM) * Claims 1-15 * | 1-8 | |
| X | FR-A- 984 922 (ROCHIAS) * Abstract * | 1 | |

TECHNICAL FIELDS SEARCHED (Int Cl 4)

A 23 L

The present search report has been drawn up for all claims

| Place of search | Date of completion of the search | Examiner |
|---|---|---|
| THE HAGUE | 29-09-1987 | VAN MOER A.M.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82